# FASCICULE DE BREVET EUROPEEN

(11) **EP 3 970 401 B1**
(45) Date de publication et mention de la délivrance du brevet: **18.02.2026**
(21) Numéro de dépôt: 20723127.5
(22) Date de dépôt: 04.05.2020
(51) Int. Cl.: H04W 16/14, H04W 72/04

(54) **PROCÉDÉ DE GESTION DE RESSOURCES D'UN RÉSEAU DE TÉLÉCOMMUNICATIONS CONVERGENT ACCÈS-FIXE ET RADIO-MOBILE, PRODUIT PROGRAMME D'ORDINATEUR ET DISPOSITIFS CORRESPONDANTS**
VERFAHREN ZUR VERWALTUNG VON RESSOURCEN EINES KONVERGIERTEN FESTEN ZUGANGS- UND MOBILFUNKTELEKOMMUNIKATIONSNETZWERKS UND ZUGEHÖRIGES COMPUTERPROGRAMMPRODUKT UND VORRICHTUNGEN
METHOD FOR MANAGING RESOURCES OF A CONVERGED FIXED ACCESS AND MOBILE RADIO TELECOMMUNICATIONS NETWORK, AND CORRESPONDING COMPUTER PROGRAM PRODUCT AND DEVICES

(30) Priorité: 15.05.2019 FR 1905044
(43) Date de publication de la demande: 23.03.2022
(73) Titulaire: Orange, 92130 Issy-les-Moulineaux (FR)
(72) Inventeur: FROMENTOUX, Gaël, 92326 Châtillon Cedex (FR); QUINTUNA RODRIGUEZ, Veronica Karina, 92326 Châtillon Cedex (FR); RADIER, Benoît, 92326 Châtillon Cedex (FR)
(74) Mandataire: Vidon Brevets & Stratégie
(86) Numéro de dépôt international: PCT/EP2020/062344
(87) Numéro de publication internationale: WO 2020/229216

(56) Documents cités:
- US-A1- 2019 132 211
- US-B1- 10 116 732

## Description

### Domaine de l'invention

Le domaine de l'invention est celui de la mise en œuvre des réseaux de télécommunications convergents accès-fixe et radio-mobile. L'invention se rapporte plus particulièrement à la gestion des ressources (e.g. ressources implémentées dans la boucle locale, ressources radio, ressources pour l'implémentation de fonctions virtualisées, dites ressources virtualisées, etc.) dans de tels réseaux de télécommunications.

L'invention a de nombreuses applications, notamment, mais non exclusivement, dans le domaine des réseaux de télécommunications conformes aux normes 3GPP (de l'anglais « 3rd Generation Partnership Project ») de dernières générations ou de générations futures.

### Art antérieur et ses inconvénients

Les réseaux radio-mobiles de génération future visent à centraliser et virtualiser les traitements effectués en bande de base dans des unités centrales, ou CU (de l'anglais « Central Units »), déportées en amont dans le réseau. Les signaux radio traités sont ensuite transmis aux éléments radio distribués, ou DU (de l'anglais « Distributed Units »), par exemple les stations de base, via des ressources implémentées dans la boucle locale (ou partie frontale) du réseau. Par exemple, les ressources de la boucle locale sont implémentées sous forme de liaisons optiques, de faisceaux hertziens, ou même de paires de conducteurs en cuivre (e.g. dans certaines configurations dans lesquelles les DUs sont connectées à une passerelle domestique, aussi appelée modem ou box, chez un particulier). Dans ce cadre, une certaine capacité des ressources utilisées entre les CUs et les DUs doit être garantie par le réseau.

Par ailleurs, différents opérateurs mobiles peuvent avoir tout ou partie de leurs DUs connectés à un seul et même réseau de télécommunications convergent accès-fixe et radio-mobile, dont les ressources sont partagées entre eux. Dans ce cadre, les opérateurs mobiles en question entrent en concurrence afin d'obtenir des ressources du réseau de télécommunications auquel leurs DUs sont connectés. C'est notamment le cas lorsqu'un nouveau besoin en ressources apparaît suite à une reconfiguration de la partie radio-mobile d'un des opérateurs (e.g. un changement de nombre de fréquences porteuses allouées à une DU). De nouvelles ressources du réseau convergent accès-fixe et radio-mobile doivent ainsi être allouées à l'opérateur mobile en question afin de supporter les nouveaux débits de données associés. Il se pose dans ce cas la problématique de l'impact de cette nouvelle allocation sur les ressources précédemment allouées à l'autre opérateur mobile.

De tels opérateurs mobiles se trouvent également en concurrence avec les clients fixes (e.g. un équipement utilisateur connecté à la partie accès-fixe du réseau via un modem connecté à la boucle locale). Par exemple, lorsqu'un tel client fixe implémente de nouveaux services nécessitant des ressources virtuelles déportées en amont dans le réseau (e.g. pour des applications du type réalité virtuelle, réalité augmentée, services à valeur ajoutée pour des micro entreprises, collectes et traitements des données des capteurs (Internet des objets, caméra de vidéosurveillance, etc.), service de stockage multimédia, etc.).

Ainsi, l'allocation de nouvelles ressources à un client donné (e.g. un client d'un opérateur mobile donné) lors de l'expression d'un nouveau besoin en ressources ne doit pas se faire en donnant l'impression aux autres clients (e.g. aux clients des autres opérateurs mobiles) qu'ils sont lésés, notamment dans un contexte de ressources totales limitées.

Il existe ainsi un besoin pour une technique améliorée de gestion des ressources (e.g. des ressources virtualisées, des ressources de la boucle locale, etc.) dans un réseau de télécommunications convergent accès-fixe et radio-mobile lorsque différents opérateurs mobiles entrent en concurrence afin d'obtenir des ressources du réseau de télécommunications en question.

Il existe également un besoin pour que la technique en question gère la concurrence entre les différents opérateurs mobiles et les clients fixes du réseau de télécommunications convergent accès-fixe et radio-mobile. Un exemple est connu de US 10 116 732 B1.

### Exposé de l'invention

Dans un mode de réalisation de l'invention, il est proposé un procédé de gestion de ressources d'un réseau de télécommunications convergent accès-fixe et radio-mobile. Une partie des ressources, dites ressources virtualisées, est implémentée sous une forme virtualisée et déportée dans le réseau. Une autre partie des ressources, dites ressources de boucle locale, est implémentée dans une boucle locale du réseau, une pluralité d'opérateurs mobiles ayant chacun au moins une station de base connectée à une partie radio-mobile du réseau via un modem dit radio-mobile connecté à la boucle locale. Selon un tel procédé, un module de gestion centralisée de l'allocation des ressources effectue les étapes suivantes :
- réception d'au moins une requête en ressources, dite requête client mobile, émise soit par un module de gestion des ressources radio-mobiles de chacun des opérateurs mobiles, soit par un premier module de gestion centralisée des demandes en ressources à partir d'au moins une requête en service radio-mobile préalablement reçue en provenance du module de gestion des ressources radio-mobiles de chacun des opérateurs mobiles ;
- envoi d'au moins une offre d'allocation des ressources aux modules de gestion des ressources radio-mobiles en fonction de ladite au moins une requête client mobile et d'au moins une règle prédéterminée d'offre d'allocation des ressources.

Ainsi, l'invention propose une solution nouvelle et inventive pour gérer les ressources du réseau de télécommunication convergent accès-fixe et radio-mobile dans le contexte où plusieurs opérateurs mobiles cherchent à obtenir des ressources du réseau en question.

Plus particulièrement, selon la méthode proposée, le module (logiciel ou matériel) de gestion centralisée de l'allocation des ressources du réseau émet des offres d'allocation à destination des différents opérateurs mobiles en tenant compte de leurs différentes requêtes (requêtes en ressources virtualisées et requêtes en ressources localisées dans la boucle locale qui peut être implémentée par exemple sous forme de liaisons optiques, de faisceaux hertziens, de paires de conducteurs en cuivre, etc.) et sur la base de règles prédéterminées d'offre d'allocation. De telles règles prédéterminées utilisées par le module de gestion centralisée de l'allocation des ressources du réseau étant, ou pouvant être, connues par les opérateurs, ceux-ci peuvent avoir confiance dans les offres d'allocation de ressources qui leurs sont faites.

Dans des modes de réalisation, la fonctionnalité remplie par le module de gestion centralisée de l'allocation des ressources du réseau est implémentée via plusieurs modules de gestion centralisée de l'allocation, par exemple via un module de gestion centralisée dédié à l'allocation des ressources virtualisées du réseau, et à un autre module de gestion centralisée dédié à l'allocation des ressources de la boucle locale du réseau.

Selon un mode de réalisation, au moins un équipement utilisateur d'un opérateur fixe est connecté à une partie accès-fixe du réseau via au moins un modem dit accès-fixe connecté à la boucle locale. Le module de gestion centralisée de l'allocation des ressources effectue une réception d'au moins une requête en ressources émise soit par ledit au moins un équipement utilisateur de l'opérateur fixe, soit par un deuxième module de gestion centralisée des demandes en ressources à partir d'au moins une requête en service fixe préalablement reçue en provenance dudit au moins un équipement utilisateur, dite requête client fixe. Ladite au moins une offre d'allocation est également envoyée audit au moins un équipement utilisateur, ladite au moins une offre d'allocation étant fonction de ladite au moins une requête client fixe.

Ainsi, les offres d'allocation de ressources tiennent également compte des requêtes en ressources (en ressources virtualisées et en ressources de la boucle locale) des clients connectés à la partie accès-fixe du réseau.

Selon un mode de réalisation, le module de gestion centralisée de l'allocation des ressources effectue une réception :
- d'au moins une information représentative de la disponibilité des ressources de boucle locale transmise par un module de gestion des ressources de boucle locale et accès-fixe du réseau ; et/ou
- d'au moins une information représentative de la disponibilité des ressources virtualisées transmise par un module de gestion des ressources virtualisées déportées dans le réseau,
ladite au moins une offre d'allocation étant fonction de ladite au moins une information représentative de la disponibilité des ressources de boucle locale et/ou de ladite au moins une information représentative de la disponibilité des ressources virtualisées.

Ainsi, les offres d'allocation de ressources tiennent également compte des requêtes en ressources (en ressources virtualisées et en ressources de la boucle locale) des clients connectés à la partie accès-fixe du réseau.

Selon un mode de réalisation, le module de gestion centralisée de l'allocation des ressources effectue une transmission de ladite au moins une information représentative de la disponibilité des ressources de boucle locale et/ou de ladite au moins une information représentative de la disponibilité des ressources virtualisées au premier et/ou deuxième module de gestion centralisée des demandes en ressources.

Ainsi, le premier et/ou deuxième module de gestion centralisée des demandes en ressources est en mesure de se constituer une base de données commune et à jour contenant les informations sur les offres en ressources de la boucle locale et en ressources virtualisées. Par ailleurs, le premier et/ou deuxième module de gestion centralisée des demandes en ressources peut faire remonter les informations contenues dans la base de données en question jusqu'aux clients fixes ou mobiles si besoin. Alternativement, la base de données peut être distribuée sur chaque client fixe ou mobile et les informations enregistrées peuvent être également certifiées par consensus par chaque client en tant que registre distribué certifié.

Selon un mode de réalisation, le module de gestion centralisée de l'allocation des ressources effectue une réception d'au moins une confirmation d'acceptation de l'offre d'allocation des ressources, dite offre d'allocation confirmée, envoyée par :
- au moins un module parmi les modules de gestion des ressources radio-mobiles de chacun des opérateurs mobiles ; et/ou
- ledit au moins un équipement utilisateur.

Selon un mode de réalisation, le module de gestion centralisée de l'allocation des ressources envoie au moins une confirmation de réservation des ressources au module de gestion des ressources de boucle locale et accès-fixe du réseau et/ou au module de gestion des ressources virtualisées déportées dans le réseau, ladite au moins une confirmation de réservation des ressources étant envoyée lorsque ladite au moins une confirmation d'acceptation de l'offre d'allocation des ressources est reçue.

Ainsi, les ressources sont effectivement allouées au client qui a envoyé la confirmation de réservation.

Selon un mode de réalisation, ladite au moins une règle prédéterminée d'offre d'allocation des ressources appartient au groupe comprenant :
- une offre d'allocation des ressources est envoyée en priorité en réponse à une requête reçue en premier dans une suite de plusieurs requêtes ;
- une offre d'allocation des ressources est envoyée en priorité en réponse à une requête reçue en dernier dans une suite de plusieurs requêtes ;
- une offre d'allocation des ressources est envoyée en priorité en réponse à une requête ayant un niveau d'urgence de traitement prioritaire dans une suite de plusieurs requêtes reçues de différents niveaux d'urgence de traitement ;
- une offre d'allocation des ressources est faite suivant un mécanisme d'enchères ;
- une offre d'allocation des ressources est faite pour une durée définie ; et
- une offre d'allocation des ressources n'est faite que si d'autres ressources sont libérées en échange.

Par exemple, lorsque l'offre d'allocation des ressources est faite suivant un mécanisme d'enchères, le mécanisme en question est par exemple un mécanisme d'enchères simples (le prix le plus élevé gagne), un mécanisme d'enchères doubles (moyennes des enchères), ou encore un mécanisme d'enchères avec ou sans prix de réserve (l'offre doit être supérieure au prix de réserve).

Dans un mode de réalisation de l'invention, il est proposé que le premier module de gestion centralisée des demandes en ressources pour clients mobiles effectue les étapes suivantes :
- réception d'au moins une requête en service radio-mobile émise par un module de gestion des ressources radio-mobiles de chacun des opérateurs mobiles ; et
- transmission au module de gestion centralisée de l'allocation des ressources du réseau d'au moins une requête en ressources tenant compte desdites au moins une requête en service radio-mobile.

Ainsi, le client mobile final ne fait qu'exprimer son besoin en termes de service. Le premier module traduit les besoins associés au service en question en termes de besoins en ressources pouvant être de différentes natures, e.g. virtuelles et/ou en ressources dans la boucle locale. De la sorte, c'est le premier module qui demande et s'assure que l'ensemble des ressources, potentiellement de différentes natures, dont a besoin le client final sont disponibles auprès du (ou des) modules de gestion centralisée de l'allocation des ressources du réseau.

Dans un mode de réalisation de l'invention, au moins un équipement utilisateur d'un opérateur fixe est connecté à une partie accès-fixe du réseau via au moins un modem dit accès-fixe connecté à la boucle locale. Il est ainsi proposé qu'un deuxième module de gestion centralisée des demandes en ressources pour clients fixes effectue les étapes suivantes :
- réception d'au moins une requête en service fixe émise par ledit au moins un équipement utilisateur de l'opérateur fixe ; et
- transmission au module de gestion centralisée de l'allocation des ressources du réseau d'au moins une requête en ressources tenant compte desdites au moins une requête en service fixe.

Ainsi, le client fixe final ne fait qu'exprimer son besoin en termes de service. Le deuxième module traduit les besoins associés au service en question en termes de besoins en ressources pouvant être de différentes natures, e.g. virtuelles et/ou en ressources dans la boucle locale. De la sorte, c'est le deuxième module qui demande et s'assure que l'ensemble des ressources, potentiellement de différentes natures, dont a besoin le client final sont disponibles auprès du (ou des) modules de gestion centralisée de l'allocation des ressources du réseau.

L'invention concerne également un programme d'ordinateur comprenant des instructions de code de programme pour la mise en œuvre du procédé tel que décrit précédemment, selon l'un quelconque de ses différents modes de réalisation, lorsqu'il est exécuté sur un ordinateur.

Dans un mode de réalisation de l'invention, il est proposé un dispositif de gestion centralisée de l'allocation de ressources d'un réseau de télécommunications convergent accès-fixe et radio-mobile. Un tel dispositif de gestion comprend une machine de calcul reprogrammable ou une machine de calcul dédiée configurée pour mettre en œuvre les étapes du procédé de gestion selon l'invention telle qu'effectuées par le module de gestion centralisée de l'allocation de ressources d'un réseau de télécommunications convergent accès-fixe et radio-mobile (selon l'un quelconque des différents modes de réalisation précités).

Ainsi, les caractéristiques et avantages de ce dispositif sont les mêmes que ceux des étapes correspondantes du procédé de gestion décrit précédemment. Par conséquent, ils ne sont pas détaillés plus amplement.

Dans un mode de réalisation de l'invention, il est proposé un dispositif de gestion centralisée des demandes en ressources d'un réseau de télécommunications convergent accès-fixe et radio-mobile pour clients mobiles. Un tel dispositif de gestion comprend une machine de calcul reprogrammable ou une machine de calcul dédiée configurée pour mettre en œuvre les étapes du procédé de gestion selon l'invention telle qu'effectuées par le premier module de gestion centralisée des demandes en ressources pour clients mobiles (selon l'un quelconque des différents modes de réalisation précités).

Ainsi, les caractéristiques et avantages de ce dispositif sont les mêmes que ceux des étapes correspondantes du procédé de gestion décrit précédemment. Par conséquent, ils ne sont pas détaillés plus amplement.

Dans un mode de réalisation de l'invention, il est proposé un dispositif de gestion centralisée des demandes en ressources d'un réseau de télécommunications convergent accès-fixe et radio-mobile pour clients fixes. Un tel dispositif de gestion comprend une machine de calcul reprogrammable ou une machine de calcul dédiée configurée pour mettre en œuvre les étapes du procédé de gestion selon l'invention telle qu'effectuées par le deuxième module de gestion centralisée des demandes en ressources pour clients fixes (selon l'un quelconque des différents modes de réalisation précités).

Ainsi, les caractéristiques et avantages de ce dispositif sont les mêmes que ceux des étapes correspondantes du procédé de gestion décrit précédemment. Par conséquent, ils ne sont pas détaillés plus amplement.

Dans un mode de réalisation de l'invention, il est proposé un nœud de réseau de télécommunications convergent accès-fixe et radio-mobile. Un tel nœud de réseau comprend au moins un dispositif parmi les dispositifs précités (selon l'un quelconque des différents modes de réalisation précités), i.e. dispositif de gestion centralisée de l'allocation de ressources d'un réseau de télécommunications convergent accès-fixe et radio-mobile, dispositif de gestion centralisée des demandes en ressources d'un réseau de télécommunications convergent accès-fixe et radio-mobile pour clients mobiles et dispositif de gestion centralisée des demandes en ressources d'un réseau de télécommunications convergent accès-fixe et radio-mobile pour clients fixes.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****fig. 1****]** représente l'architecture d'un réseau de télécommunications convergent accès-fixe et radio-mobile dont les ressources sont gérées par un procédé de gestion selon un mode de réalisation de l'invention ;
**[****fig. 2****]** représente les étapes d'un procédé de gestion des ressources du réseau de la fig. 1 selon un mode de réalisation de l'invention ;
**[****fig. 3****]** représente l'architecture d'un réseau de télécommunications convergent accès-fixe et radio-mobile dont les ressources sont gérées par un procédé de gestion selon un autre mode de réalisation de l'invention ;
**[****fig. 4****]** représente les étapes du procédé de gestion des ressources du réseau de la fig. 3 selon un autre mode de réalisation de l'invention ;
**[****fig. 5****]** représente un exemple de structure de dispositif permettant la mise en œuvre des étapes du procédé de gestion des ressources selon un mode de réalisation de l'invention.

### Description détaillée de modes de réalisation de l'invention

Le principe général de l'invention repose sur l'utilisation d'un module (logiciel ou matériel) de gestion centralisée de l'allocation des ressources d'un réseau de télécommunications convergent accès-fixe et radio-mobile afin d'adresser de manière centralisée les différentes requêtes en ressources émises par les clients mobiles de différents opérateurs mobiles ayant au moins une partie de leurs DUs connectées au réseau en question. Plus particulièrement, le module de gestion centralisée de l'allocation des ressources émet des offres d'allocation à destination des différents opérateurs mobiles en tenant compte des différentes requêtes en ressources émises par les opérateurs mobiles en question ainsi que de règles prédéterminées d'offre d'allocation. De telles règles prédéterminées étant, ou pouvant être, connues par les opérateurs, ceux-ci peuvent avoir confiance dans les offres d'allocation de ressources qui leurs sont faites.

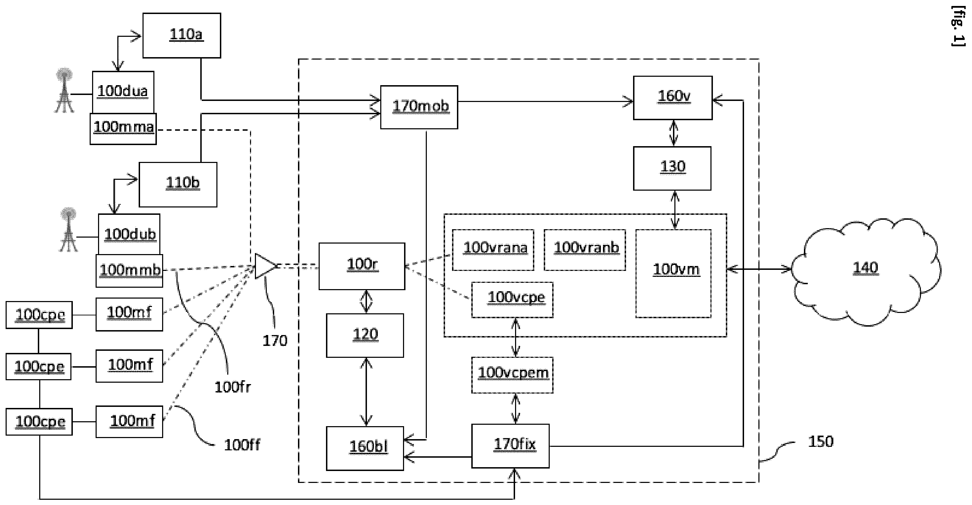

On présente désormais, en relation avec la **fig. 1** l'architecture d'un réseau de télécommunications convergent accès-fixe et radio-mobile dont les ressources sont gérées par un procédé de gestion selon un mode de réalisation de l'invention.

Dans le réseau en question, un nœud 150 du réseau convergent accès-fixe et radio-mobile est connecté, en amont, au cœur 140 de réseau proprement dit et, en aval, à une pluralité de modems du réseau. La pluralité de modems comprend :
- des modems dit accès-fixe 100mf, au moins un équipement utilisateur 100cpe fixe étant connecté à la partie accès-fixe du réseau via un modem accès-fixe 100mf correspondant ; et
- des modems dit radio-mobile 100mma, 100mmb, des stations de base 100dua, 100dub étant connectées à la partie radio-mobile du réseau via un modem radio-mobile 100mma, 100mmb correspondant.

Plus particulièrement, la pluralité de modems 100mf, 100mma, 100mmb est connectée à un routeur 100r du nœud 150 via des ressources de la boucle locale, ici des fibres optiques 100fr, 100ff transitant par un multiplexeur 170. Les modems accès-fixe 100mf sont connectés au routeur 100r par des fibres optiques 100ff correspondantes et les modems radio-mobiles 100mma, 100mmb sont connectés au routeur 100r par des fibres optiques 100fr correspondantes (e.g. selon une infrastructure du type FTTH (pour « Fiber To The Home » en anglais).

Dans d'autres modes de réalisation, il peut n'y avoir qu'un seul modem accès-fixe 100mf.

Dans d'autres modes de réalisation, la boucle locale utilise une autre technologie que la fibre optique, et les modems 100mf, 100mm sont connectés au routeur 100r via d'autres moyens que les fibres optiques 100fr, 100ff (e.g. via des faisceaux hertziens, des paires de conducteurs en cuivre, etc.).

De retour à la fig. 1, les stations de base 100dua, 100dub appartiennent chacune à deux opérateurs mobiles différents. Plus particulièrement, le premier opérateur mobile a la station de base 100dua connectée à la partie radio-mobile du réseau via le modem radio-mobile 100mma et le deuxième opérateur mobile a la station de base 100dub connectée à la partie radio-mobile du réseau via le modem radio-mobile 100mmb.

Dans d'autres modes de réalisation, plus de deux opérateurs mobiles ont chacun au moins une station de base connectée à la partie radio-mobile du réseau via un modem lui-même connecté à la boucle locale du réseau.

De retour à la fig. 1, le module 120 est un module de gestion centralisée à la fois :
- des ressources de boucle locale dédiées à la fois au fonctionnement de la partie radio-mobile et de la partie accès-fixe du réseau ; et
- des autres ressources, dites accès-fixe, dédiées plus spécifiquement au fonctionnement de la partie accès-fixe du réseau.

Dans la présente demande, le module 120 est aussi dénommé « **module de gestion des ressources de boucle locale et accès-fixe** ». Par ailleurs, on notera de manière générale que le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour le (ou les) module concerné. De la même manière, un composant matériel correspond à tout élément d'un ensemble matériel (ou hardware) apte à mettre en œuvre une fonction ou un ensemble de fonctions pour le (ou les) module concerné (circuit intégré, carte à puce, carte à mémoire, etc.). Dans ce cas, le composant matériel prend la forme d'un dispositif apte à ou configuré pour mettre en œuvre une fonction ou un ensemble de fonctions telles que décrites pour le (ou les) module concerné.

Plus particulièrement, le module 120 gère de manière centralisée, entre autres, les ressources de boucle locale du réseau sur la base d'une part d'au moins un indicateur de performances de la boucle locale du réseau, dit « indicateur performances boucle locale ». Le (ou les) indicateur performances boucle locale est transmis notamment par le routeur 100r et/ou tout ou partie des modems 100mma, 100mmb, 100mf via le routeur 100r.

Par ailleurs, le module 120 transmet à un module 160bl de **gestion centralisée dédié à l'allocation des ressources de la boucle locale** du réseau une (ou plusieurs) information représentative de la disponibilité des ressources de boucle locale. Une telle information représentative de la disponibilité des ressources de boucle locale est par exemple obtenue à partir de (ou des) l'indicateur performances boucle locale.

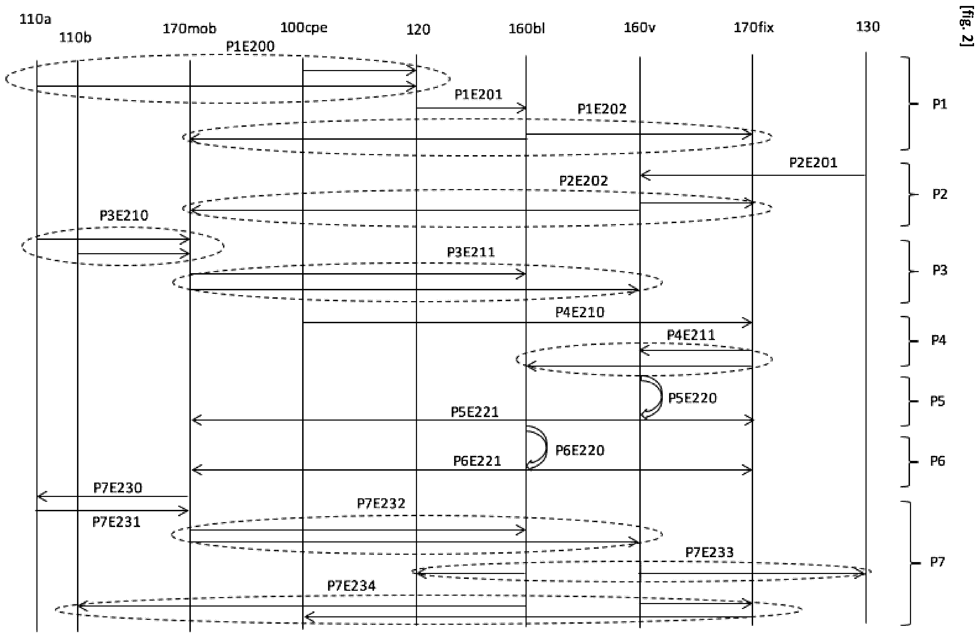

Comme décrit ci-dessous en relation avec la fig. 2, le module 160bl de gestion centralisée dédié à l'allocation des ressources de la boucle locale du réseau reçoit une (ou plusieurs) requête en en ressources de boucle locale émises par un module 170mob de gestion centralisée des demandes en ressources du réseau pour clients radio-mobiles et/ou par un module 170fix de gestion centralisée des demandes en ressources du réseau pour clients fixes. En réponse à de telles requêtes, le module 160bl envoi une (ou plusieurs) offres de ressources de la boucle locale aux clients mobiles et/ou aux clients fixes correspondants.

Les modules 110a et 110b **de gestion des ressources radio-mobiles** sont dédiées respectivement au fonctionnement de la partie radio-mobile des premier et deuxième opérateurs mobiles précités. A titre d'exemple illustratif, les modules 110a et 110b pourraient s'apparenter chacun au C-SON (de l'anglais « Centralized- Self Organizing Networks ») tel que défini au sein du 3GPP, mais ici avec de nouvelles fonctionnalités permettant la gestion des ressources du réseau. Par exemple, les modules 110a et 110b reçoivent chacun un (ou plusieurs) indicateur de performances de la partie radio-mobile qu'ils gèrent, transmis par tout ou partie des stations de base 100dua, 100dub et/ou par les modules 100vrana et 100vranb de fonctions radio virtualisées déportées dans le réseau et dédiées aux parties radio-mobile des premier et deuxième opérateurs mobiles. Par exemple, les modules 100vrana et 100vranb correspondent à un élément radio centralisé CU au sens du 3GPP. Dans d'autres modes de réalisation, plus de deux opérateurs mobiles ont chacun une station de base connectée à une partie radio-mobile du réseau. Dans ce cas, chaque opérateur mobile a un module de gestion des ressources radio-mobiles correspondant pour gérer le fonctionnement de la partie radio-mobile qui lui est dédiée.

De retour à la fig. 1, le **module 130 de gestion des ressources virtualisées** déportées dans le réseau gère de manière centralisée les ressources virtualisées 100vm (en termes de ressources matérielles, e.g. capacité de calcul, capacité de stockage, capacité de mémoire vive, etc.) du réseau sur la base du module. Pour ce faire, le module 130 reçoit un (ou plusieurs) indicateur performances de la partie virtualisée du réseau, dit « indicateur performances virtualisé », envoyé par le (ou les) module 100vcpe de fonctions virtualisées déportées dans le réseau et/ou par le module de ressources virtualisées 100vm. Plus particulièrement, le module 100vcpe implémente des fonctions virtualisées déportées dans le réseau et dédiées à un équipement utilisateur fixe 100cpe correspondant. Dans la présente demande, le module 100vcpe est aussi dénommé « module de fonctions équipement fixe virtualisées ». Le module 100vcpem est un module de gestion des fonctions virtualisées déportées dans le réseau telles qu'implémentées dans le module 100vcpe.

Par ailleurs, le module 130 transmet à un module 160v de **gestion centralisée dédié à l'allocation des ressources virtualisées** du réseau une (ou plusieurs) information représentative de la disponibilité des ressources virtualisées. Une telle information représentative de la disponibilité des ressources virtualisées est par exemple obtenue à partir d'un (ou plusieurs) indicateur de performances des ressources virtualisées du réseau envoyé par le (ou les) module 100vcpe de fonctions virtualisées déportées dans le réseau et/ou de ressources virtualisées 100vm (e.g. un indicateur de disponibilité et/ou charge des ressources virtualisées, un indicateur de performances des fonctions (e.g. vCPE ou vRAN) supportées par ces ressources).

Comme décrit ci-dessous en relation avec la fig. 2, le module 160v de gestion centralisée dédié à l'allocation des ressources virtualisées du réseau reçoit une (ou plusieurs) requête en ressources (virtuelles ou de boucle locale) émises par le module 170mob de gestion centralisée des demandes en ressources du réseau pour clients radio-mobiles et/ou par le module 170fix de gestion centralisée des demandes en ressources du réseau pour clients fixes. En réponse à de telles requêtes, le module 160bl envoie une (ou plusieurs) offres de ressources virtualisées aux clients mobiles et/ou aux clients fixes correspondants.

Le module 170mob de gestion centralisée des demandes en ressources du réseau pour clients radio-mobiles centralise les requêtes des clients mobiles, envoyées par les modules 110a et 110b, en termes de services mobiles. Le module 170mob traduit les besoins associés aux services mobiles en question en termes de besoins en ressources (virtualisées et/ou de la boucle locale). Le module 170mob requière les besoins en ressources obtenus auprès des modules 160bl et/ou 160v.

De même, le module 170fix de gestion centralisée des demandes en ressources du réseau pour clients fixes centralise les requêtes des clients fixes 100cpe en termes de services fixes. Le module 170fix traduit les besoins associés aux services fixes en question en termes de besoins en ressources (virtualisées et/ou de la boucle locale). Le module 170fix requière les besoins en ressources obtenus auprès des modules 160bl et/ou 160v.

On présente désormais, en relation avec la **fig. 2** les étapes d'un procédé de gestion des ressources du réseau de la fig. 1 selon un mode de réalisation de l'invention.

### Phase P1 :

Lors d'une **étape P1E200,** le module 120 reçoit le (ou les) indicateur performances boucle locale transmis notamment par le routeur 100r et/ou tout ou partie des modems 100mma, 100mmb, 100mf via le routeur 100r.

Lors d'une **étape P1E201,** le module 160bl reçoit du module 120 une (ou plusieurs) information représentative de la disponibilité des ressources de boucle locale. Une telle information représentative de la disponibilité des ressources de boucle locale est par exemple obtenue par le module 120 à partir de (ou des) l'indicateur performances boucle locale reçu à l'étape P1E200 (e.g. les clients mobiles doivent avoir un débit garanti).

Lors d'une **étape P1E202,** le module 160bl transmet la (ou les) information représentative de la disponibilité des ressources de boucle locale au module 170fix et au module 170mob. Ainsi, le module 170mob et le module 170fix sont en mesure de se constituer une base de données commune et à jour contenant les informations sur les offres en ressources de la boucle locale. Par ailleurs, les clients fixes ou mobiles peuvent accéder en lecture aux informations contenues dans la base de données en question si besoin. Alternativement, la base de données peut être distribuée sur tout ou partie des clients fixes ou mobiles disposant des ressources nécessaires pour ce faire. Les informations enregistrées dans la base de données peuvent également être certifiées par consensus par chaque client en tant que registre distribué certifié.

Dans d'autres modes de réalisation, le module 160bl transmet la (ou les) information représentative de la disponibilité des ressources de boucle locale seulement à l'un des modules 170fix et 170mob afin de limiter les échanges de données. Dans d'autres modes de réalisation, le module 160bl ne met pas en œuvre l'étape P1E202 afin de limiter encore plus les échanges de données.

### Phase P2 :

Lors d'une **étape P2E200** (non illustrée sur la fig. 1), le module 130 reçoit le (ou les) indicateur performances virtualisée, e.g. envoyé par le (ou les) module 100vcpe de fonctions virtualisées déportées dans le réseau et/ou ressources virtualisées 100vm.

Lors d'une **étape P2E201,** le module 160v reçoit du module 130 une (ou plusieurs) information représentative de la disponibilité des ressources virtualisées. Une telle information représentative de la disponibilité des ressources virtualisées est par exemple obtenue par le module 130 à partir de (ou des) l'indicateur performances virtualisées reçu à l'étape P2E200 (e.g. les ressources en question sont de type capacité de calcul, capacité de stockage mémoire, capacité de mémoire vive, etc.).

Lors d'une **étape P2E202,** le module 160v transmet la (ou les) information représentative de la disponibilité des ressources virtualisées au module 170fix et au module 170mob. Ainsi, le module 170mob et le module 170fix sont en mesure de se constituer une base de données commune et à jour contenant les informations sur les offres en ressources virtualisées. Par ailleurs, le module 170mob et le module 170fix peuvent faire remonter les informations contenues dans la base de données en question jusqu'aux clients fixes ou mobiles si besoin.

Dans d'autres modes de réalisation, le module 160v transmet la (ou les) information représentative de la disponibilité des ressources virtualisées seulement à l'un des modules 170fix et 170mob afin de limiter les échanges de données. Dans d'autres modes de réalisation, le module 160v ne met pas en œuvre l'étape P2E202 afin de limiter encore plus les échanges de données.

### Phase P3 :

Lors d'une **étape P3E210,** le module 170mob de gestion centralisée des demandes en ressources du réseau pour clients radio-mobiles centralise les requêtes des clients mobiles, envoyées par les modules 110a et 110b, en termes de services mobiles.

Lors d'une **étape P3E211,** le module 170mob traduit les besoins associés aux services mobiles en question en termes de besoins en ressources (virtualisées et/ou de la boucle locale) et envoie une (ou plusieurs) requête correspondante en ressources auprès des module 160bl et/ou 160v suivant la nature des ressources demandées (i.e. au module 160bl pour les ressources de boucle locale et module 160v pour les ressources virtualisées). Par exemple, pour des clients mobiles, la requête en ressources envoyée par le module 170mob au module 160bl concerne des ressources de type « débit garanti » et la requête au module 160v concerne des ressources de type « dédiées » (ou « haute résilience » en ce qu'elles ne peuvent être partagées lorsqu'elles ne sont pas utilisées).

Dans certains modes de réalisation, le module 170mob vérifie avant de les envoyer que la (ou les) requêtes en question correspondent à des ressources effectivement disponibles en utilisant la connaissance des informations représentatives de la disponibilité des ressources de boucle locale et/ou virtualisées émises par les modules 160bl et/ou 160v lors des étapes P1E202 et P2E202. **Phase P4** :
Lors d'une **étape P4E210,** le module 170fix de gestion centralisée des demandes en ressources du réseau pour clients fixes centralise les requêtes des clients fixes 100cpe en termes de services fixes (e.g. pour un service de réalité augmentée).

Lors d'une **étape P4E211,** le module 170fix traduit les besoins associés aux services fixes en question en termes de besoins en ressources (virtualisées et/ou de la boucle locale) et envoie une (ou plusieurs) requête correspondante en ressources auprès des module 160bl et/ou 160v suivant la nature des ressources demandées (i.e. au module 160bl pour les ressources de boucle locale et module 160v pour les ressources virtualisées).

Dans certains modes de réalisation, le module 170fix vérifie avant de les envoyer que la (ou les) requêtes en question correspondent à des ressources effectivement disponibles en utilisant la connaissance des informations représentatives de la disponibilité des ressources de boucle locale et/ou virtualisées émises par les modules 160bl et/ou 160v lors des étapes P1E202 et P2E202.

### Phase P5 :

Lors d'une **étape P5E220,** le module 160v décide la (ou les) offre d'allocation de ressources virtualisées du réseau à faire aux différents clients pour lesquels le module 160v a reçu une requête en ressources lors de l'étape P3E211 et/ou lors de l'étape P4E211.

Plus particulièrement, le module 160v décide la (ou les) offre d'allocation de ressources virtualisées en fonction de la (ou les) requête en question et d'au moins une règle prédéterminée d'offre d'allocation des ressources. De telles règles prédéterminées utilisées par le module 160v étant (ou pouvant être) connues par les opérateurs mobiles, ceux-ci peuvent avoir confiance dans les offres d'allocation de ressources qui leur sont faites.

Par exemple, une telle règle prédéterminée d'offre d'allocation des ressources appartient au groupe comprenant :
- une offre d'allocation des ressources est envoyée en priorité en réponse à une requête reçue en premier dans une suite de plusieurs requêtes ;
- une offre d'allocation des ressources est envoyée en priorité en réponse à une requête reçue en dernier dans une suite de plusieurs requêtes ;
- une offre d'allocation des ressources est envoyée en priorité en réponse à une requête ayant un niveau d'urgence de traitement prioritaire dans une suite de plusieurs requêtes reçues de différents niveaux d'urgence de traitement ;
- une offre d'allocation des ressources est faite suivant un mécanisme d'enchères (e.g. un mécanisme d'enchères simples (le prix le plus élevé gagne), un mécanisme d'enchères doubles (moyennes des enchères), ou encore un mécanisme d'enchères avec ou sans prix de réserve (l'offre doit être supérieure au prix de réserve)) ;
- une offre d'allocation des ressources est faite pour une durée définie ; et
- une offre d'allocation des ressources n'est faite que si d'autres ressources sont libérées en échange.

Dans certains modes de réalisation, la (ou les) offre d'allocation de ressources virtualisées est également fonction de la (ou les) information représentative de la disponibilité des ressources de boucle locale et/ou de la (ou les) information représentative de la disponibilité des ressources virtualisées.

Lors d'une **étape P5E221,** le module 160v envoi la (ou les) offre d'allocation de ressources virtualisées à destination des différents clients via le module 170mob et/ou le module 170fix suivant l'origine des requêtes en ressources reçues lors de l'étape P3E211 et/ou lors de l'étape P4E211.

Dans des variantes, une ressource virtualisée proposée dans une offre d'allocation donnée ne peut pas être proposée via une autre offre à un autre client. Elle est remise en jeux parmi l'ensemble des ressources disponibles si le client auquel l'offre est adressée n'envoie pas une confirmation d'acceptation de l'offre d'allocation avant un délai prédéterminé.

### Phase P6 :

Lors d'une **étape P6E220,** le module 160bl décide la (ou les) offre d'allocation de ressources de boucle locale du réseau à faire aux différents clients pour lesquels le module 160v a reçu une requête en ressources lors de l'étape P3E211 et/ou lors de l'étape P4E211.

Plus particulièrement, le module 160bl décide la (ou les) offre d'allocation de ressources de boucle locale en fonction de la (ou les) requête en question et d'au moins une règle prédéterminée d'offre d'allocation des ressources. Par exemple, le module 160bl met en œuvre une règle du type de celles mises en œuvre par le module 160v pendant la phase P5 et données en exemple ci-dessus.

Dans certains modes de réalisation, la (ou les) offre d'allocation de ressources de boucle locale est également fonction de la (ou les) information représentative de la disponibilité des ressources de boucle locale et/ou de la (ou les) information représentative de la disponibilité des ressources virtualisées.

Lors d'une **étape P6E221,** le module 160bl envoi la (ou les) offre d'allocation de ressources virtualisées à destination des différents clients via le module 170mob et/ou le module 170fix suivant l'origine des requêtes en ressources reçues lors de l'étape P3E211 et/ou lors de l'étape P4E211.

De même dans des variantes, une ressource de boucle locale proposée dans une offre d'allocation donnée ne peut pas être proposée via une autre offre à un autre client. Elle est remise en jeux parmi l'ensemble des ressources disponibles si le client auquel l'offre est adressée n'envoie pas une confirmation d'acceptation de l'offre d'allocation avant un délai prédéterminé.

### Phase P7 :

A la suite des phases P5 et P6, le module 170mob et/ou le module 170fix ont reçu les offres d'allocation de ressources de la part des modules 160bl et/ou 160v. De la sorte, le module 170mob et/ou le module 170fix envoie ensuite les offres en question aux clients mobiles et/ou fixes qui ont pu obtenir une offre d'allocation de ressources.

Dans l'exemple illustré sur la fig. 2, le module 110a du premier opérateur mobile a obtenu une offre d'allocation de ressources suite à sa requête en service faite à l'étape P3E210. A contrario, le module 110b du deuxième opérateur mobile ainsi que le client fixe 100cpe n'ont obtenu aucune offre d'allocation de ressources suite à leur requête faite respectivement aux étapes P3E210 et P4E210. De la sorte :
- lors d'une **étape P7E230,** le module 170mob envoi l'offre d'allocation de ressource (virtualisées et/ou de boucle locale suivant le besoin exprimé dans la requête en service envoyée lors de l'étape P3E210 précitée) au module 110a ;
- lors d'une **étape P7E231,** le module 110a envoi une confirmation d'acceptation de l'offre d'allocation des ressources, dite offre d'allocation confirmée, au module 170mob ;
- lors d'une **étape P7E232,** le module 170mob envoi l'offre d'allocation confirmée au module 160bl et/ou au module 160v suivant la nature des ressources proposées (au module 160v pour les ressources virtualisées et/ou au module 160bl pour les ressources de boucle locale) ;
- lors d'une **étape P7E233,** le module 160bl et/ou le module 160v envoie une (ou plusieurs) confirmation de réservation des ressources au module 120 et/ou au module 130 suivant la nature des ressources proposées (au module 130 pour les ressources virtualisées et/ou au module 120 pour les ressources de boucle locale). Par exemple, la (ou les) confirmation de réservation des ressources est envoyée au module 120 et/ou au module 130 lorsque la (ou les) confirmation d'acceptation de l'offre d'allocation des ressources est reçue lors de l'étape P7E232 précitée. Dans certaines variantes, le module 120 et/ou au module 130 accuse réception de la (ou des) confirmation de réservation des ressources reçues.
- lors d'une **étape P7E234,** le module 160bl et/ou le module 160v envoie une information
au module 170mob et au module 170fix indiquant respectivement que le module 110b et le client fixe 100cpe n'ont pas d'offre d'allocation de ressources qui leur est faite. Le module 170mob et le module 170fix transmette l'information en question respectivement au module 110b et au client fixe 100cpe.

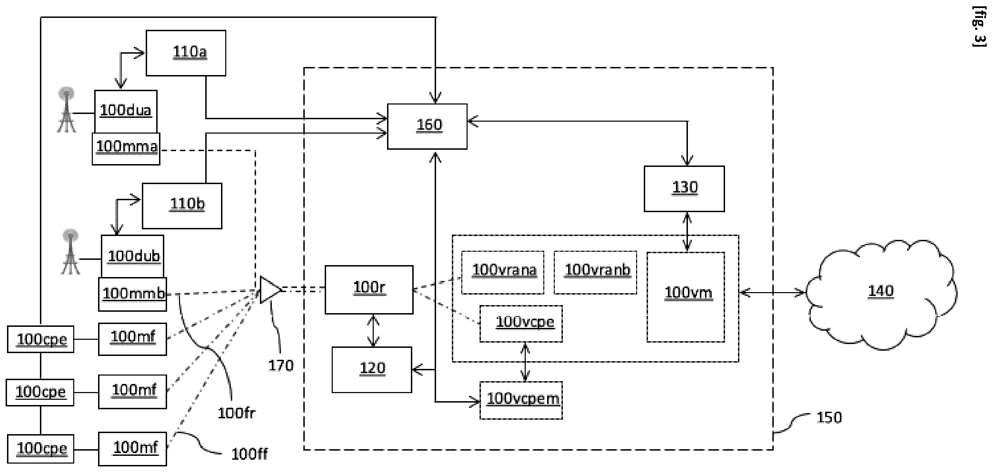

On présente désormais, en relation avec la **fig. 3** l'architecture d'un réseau de télécommunications convergent accès-fixe et radio-mobile dont les ressources sont gérées par un procédé de gestion selon un autre mode de réalisation de l'invention.

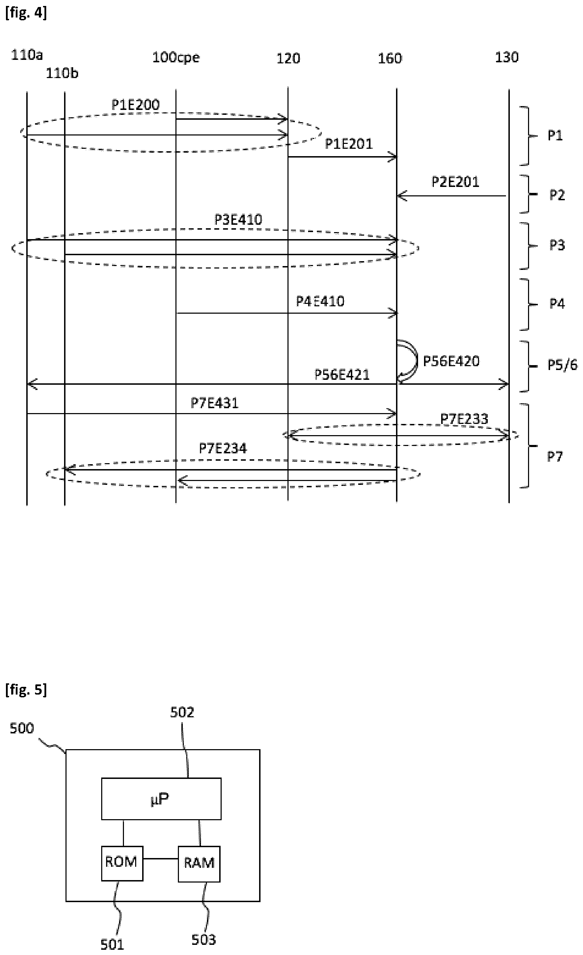

On retrouve les mêmes éléments que dans le mode de réalisation illustré sur la fig. 1, si ce n'est les modules 170fix et 170mob qui sont absents ici. Par ailleurs, les modules 160v et 160bl sont fusionnés en un seul et même module 160 qui implémente, moyennant quelques adaptations, les fonctionnalités des deux modules 160v et 160bl comme décrit ci-dessous en relation avec la fig. 4. On présente désormais, en relation avec la **fig. 4** les étapes d'un procédé de gestion des ressources du réseau de la fig. 3 selon un autre mode de réalisation de l'invention.

On retrouve dans ce mode de réalisation les étapes des phase P1 et P2 du mode de réalisation illustré sur la fig. 2, si ce n'est que lors de l'étape P1E201, le module 120 envoi maintenant la (ou les) information représentative de la disponibilité des ressources de boucle locale au module 160 et non plus au module 160bl, le module 160 implémentant maintenant les fonctionnalités des deux modules 160v et 160bl. De même lors de l'étape P2E201, le module 130 envoi la (ou les) information représentative de la disponibilité des ressources virtualisées au module 160 et non plus au module 160v.

Par ailleurs, les étapes P1E202 et P2E202 ne sont plus mises en œuvre ici, les modules 170fix et 170mob n'étant plus implémentés.

Dans le mode de réalisation de la fig. 4, lors de la phase P3 les étapes P3E210 et P3E211 de la fig. 2 sont ici fusionnées en une seule **étape P3E410** pendant laquelle les clients radio-mobiles envoient, via les modules 110a et 110b, directement au module 160 une (ou plusieurs) requête en ressources (ressources virtualisées et/ou ressources de la boucle locale).

De même, lors de la phase P4, les étapes P4E210 et P4E211 de la fig. 2 sont ici fusionnées en une seule **étape P4E410** pendant laquelle les clients mobiles envoient, via les modules 110a et 110b, directement aux module 160 une (ou plusieurs) requête en ressources (virtualisées et/ou de la boucle locale). Il en est de même pour les clients fixes 100cpe.

Ainsi, selon ce mode de réalisation, le client final (mobile ou fixe) exprime son besoin directement en termes de besoins en ressources pouvant être de différentes natures (e.g. virtuelles et/ou en ressources dans la boucle locale). De la sorte, c'est le client final en question qui doit s'assurer qu'il reçoit bien autant d'offres d'allocations de ressources, potentiellement de différentes natures, que nécessaire afin de mettre en œuvre un service donné. A contrario, dans le mode de réalisation de la fig.2, ce sont les modules 170fix et 170mob qui s'assure de cette cohérence et non pas le client final.

De retour à la fig. 4, lors de la phase P5/6 (correspondant à une fusion des phases P5 et P6 de la fig. 2), les étapes P5E220 et P6E220 de la fig. 2 sont ici fusionnées en une seule **étape P56E420** pendant laquelle le module 160 décide la (ou les) offre d'allocation de ressources (virtualisées et/ou de la boucle locale) du réseau à faire aux différents clients pour lesquels le module 160 a reçu une requête en ressources lors de l'étape P3E410 et/ou de l'étape P4E410.

Par ailleurs, les étapes P5E221 et P6E221 de la fig. 2 sont ici fusionnées en une seule **étape P56E421** pendant laquelle le module 160 envoi la (ou les) offre d'allocation de ressources (virtualisées et/ou de la boucle locale) du réseau aux clients correspondants, i.e. les modules 110a et/ou 110b et/ou clients fixes 100cpe, suivant l'origine des requêtes en ressources reçues lors de l'étape P3E410.

De même, lors de la phase P7, les étapes P7E231 et P7E232 de la fig. 2 sont ici fusionnées en une seule **étape P7E431** pendant laquelle le module 110a envoie une confirmation d'acceptation de l'offre d'allocation des ressources, dite offre d'allocation confirmée, au module 160 et non plus au module 170mob.

De même, lors de l'étape P7E233, c'est le module 160, et non plus le module 160bl et/ou le module 160v, qui envoie une (ou plusieurs) confirmation de réservation des ressources au module 120 et/ou au module 130 suivant la nature des ressources proposées (virtualisées et/ou de boucle locale). En effet, le module 160 implémente maintenant les fonctionnalités des deux modules 160v et 160bl.

Il en est de même lors de l'étape P7E234 pendant laquelle c'est le module 160, et non plus le module 160bl et/ou le module 160v, qui envoie une information directement au module 110b et au client fixe 100cpe indiquant respectivement qu'ils n'ont pas d'offre d'allocation de ressources qui leur est faite.

Dans d'autres modes de réalisation, les modules 170fix et 170mob ne sont pas implémentés, comme dans le mode de réalisation des figs. 3 et 4, cependant, les modules 160v et 160bl sont tout de même implémentés de manière distincte et non pas sous forme d'un seul module 160. Dans ces modes de réalisation, le modules 160v gère les offres d'allocation des ressources virtualisées du réseau et le modules 160bl gère les offres d'allocation des ressources de boucle locale du réseau avec les fonctionnalités décrites ci-dessus en relation avec les figs. 1 et 2.

Dans d'autres modes de réalisation, les modules 160v et 160bl sont fusionnés en un seul et même module 160 comme dans le mode de réalisation des figs. 3 et 4, cependant les modules 170fix et 170mob sont tout de même mis en œuvre (sous forme d'un module unique ou de deux modules distincts) avec les fonctionnalités décrites ci-dessus en relation avec les figs. 1 et 2.

Dans d'autres modes de réalisation, un module unique implémente à la fois les fonctionnalités des modules 170fix, 170mob, 160v et 160bl. Dans ces modes de réalisation, les clients mobiles 110a et 110b envoient au module unique en question une (ou plusieurs) requête en services mobiles. Il en est de même pour les clients fixes 100cpe qui envoient au module unique une (ou plusieurs) requête en services fixes. C'est ainsi le module unique qui traduit les besoins associés aux services en question en termes de besoins en ressources (virtualisées et/ou de la boucle locale) en implémentant ainsi les fonctionnalités des modules 170fix et 170mob décrites ci-dessus en relation avec les figs. 1 et 2.

On présente désormais, en relation avec la **fig. 5** un exemple de structure de dispositif 500 permettant de mettre en œuvre les étapes du procédé de gestion de gestion des ressources des figs. 2 et 3 selon un mode de réalisation de l'invention.

Le dispositif 500 comprend une mémoire vive 503 (par exemple une mémoire RAM), une unité de traitement 502 équipée par exemple d'un processeur, et pilotée par un programme d'ordinateur stocké dans une mémoire morte 501 (par exemple une mémoire ROM ou un disque dur). A l'initialisation, les instructions de code du programme d'ordinateur sont par exemple chargées dans la mémoire vive 503 avant d'être exécutées par le processeur de l'unité de traitement 502. Cette fig. 3 illustre seulement une manière particulière, parmi plusieurs possibles, de réaliser le dispositif 500 afin qu'il effectue certaines étapes du procédé de gestion selon l'invention (selon l'un quelconque des modes de réalisation et/ou variantes décrit(e)s ci-dessus en relation avec la fig. 2). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 500 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Dans certains modes de réalisation, le dispositif 500 implémente l'un quelconque des modules 170fix, 170mob, 160v et 160bl.

Dans certains modes de réalisation, le dispositif 500 implémente plusieurs ou la totalité des modules 170fix, 170mob, 160v et 160bl.

Dans certains modes de réalisation, le dispositif 500 est inclus dans un nœud de réseau, e.g. dans le nœud 150.

## Revendications

1. Procédé de gestion d'allocation de ressources d'un réseau de télécommunications convergent accès-fixe et radio-mobile mis en œuvre par un module (160, 160bl, 160v) de gestion centralisée de l'allocation desdites ressources, une partie desdites ressources, dites ressources virtualisées, étant implémentée sous une forme virtualisée et déportée dans ledit réseau, une autre partie desdites ressources, dites ressources de boucle locale, étant implémentée dans une boucle locale dudit réseau, une pluralité d'opérateurs mobiles ayant chacun au moins une station de base connectée à une partie radio-mobile dudit réseau via un modem dit radio-mobile connecté à ladite boucle locale,
le procédé de gestion d'allocation de ressources comprenant les étapes suivantes :
- **réception** (P3E211, P3E410) d'au moins une requête en ressources, dite requête client mobile, émise soit par un **module (110a, 110b) de gestion des ressources radio-mobiles** de chacun desdits opérateurs mobiles, soit par un premier **module (170mob) de gestion centralisée des demandes en ressources** à partir d'au moins une requête en service radio-mobile préalablement reçue en provenance dudit module de gestion des ressources radio-mobiles de chacun desdits opérateurs mobiles ;
- **envoi** (P5E221, P56E421) d'au moins une offre d'allocation desdites ressources à destination desdits modules de gestion des ressources radio-mobiles en fonction de ladite au moins une requête client mobile et d'au moins une règle prédéterminée d'offre d'allocation des ressources.

2. Procédé selon la revendication 1 dans lequel au moins un équipement utilisateur d'un opérateur fixe est connecté à une partie accès-fixe dudit réseau via au moins un modem dit accès-fixe connecté à ladite boucle locale,
et dans lequel ledit module de gestion centralisée de l'allocation desdites ressources effectue une **réception** (P4E211, P4E410) d'au moins une requête en ressources émise soit par ledit au moins un équipement utilisateur (100cpe) dudit opérateur fixe, soit par un deuxième **module (170fix) de gestion centralisée des demandes en ressources** à partir d'au moins une requête en service fixe préalablement reçue en provenance dudit au moins un équipement utilisateur, dite requête client fixe ;
et dans lequel ladite au moins une offre d'allocation est également envoyée à destination dudit au moins un équipement utilisateur, ladite au moins une offre d'allocation étant fonction de ladite au moins une requête client fixe.

3. Procédé selon la revendication 1 ou 2 dans lequel ledit module de gestion centralisée de l'allocation desdites ressources effectue une **réception** (P1E201, P2E201) :
- d'au moins une information représentative de la disponibilité desdites ressources de boucle locale transmise par un **module (120) de gestion des ressources de boucle locale et accès-fixe** dudit réseau ; et/ou
- d'au moins une information représentative de la disponibilité desdites ressources virtualisées transmise par un **module (130) de gestion des ressources virtualisées** déportées dans ledit réseau,
ladite au moins une offre d'allocation étant fonction de ladite au moins une information représentative de la disponibilité des ressources de boucle locale et/ou de ladite au moins une information représentative de la disponibilité des ressources virtualisées.

4. Procédé selon la revendication 3 dans lequel ledit module de gestion centralisée de l'allocation desdites ressources effectue une **transmission** (P1E202, P2E202) de ladite au moins une information représentative de la disponibilité des ressources de boucle locale et/ou de ladite au moins une information représentative de la disponibilité des ressources virtualisées audit premier et/ou deuxième module de gestion centralisée des demandes en ressources.

5. Procédé selon l'une quelconque des revendications 1 à 4 dans lequel ledit module de gestion centralisée de l'allocation desdites ressources effectue une **réception** (P7E231, P7E232, P7E431) d'au moins une confirmation d'acceptation de ladite offre d'allocation desdites ressources, dite offre d'allocation confirmée, envoyée par :
- au moins un module parmi lesdits modules de gestion des ressources radio-mobiles de chacun desdits opérateurs mobiles ; et/ou
- ledit au moins un équipement utilisateur.

6. Procédé selon la revendication 5 lorsqu'elle dépend de la 3 dans lequel ledit module de gestion centralisée de l'allocation desdites ressources **envoie** (P7E233) au moins une confirmation de réservation desdites ressources audit module de gestion des ressources de boucle locale et accès-fixe dudit réseau et/ou audit module de gestion des ressources virtualisées déportées dans ledit réseau, ladite au moins une confirmation de réservation desdites ressources étant envoyée lorsque ladite au moins une confirmation d'acceptation de ladite offre d'allocation desdites ressources est reçue.

7. Procédé selon l'une quelconque des revendications 1 à 6 dans lequel ladite au moins une règle prédéterminée d'offre d'allocation des ressources appartient au groupe comprenant :
- une offre d'allocation desdites ressources est envoyée en priorité en réponse à une requête reçue en premier dans une suite de plusieurs requêtes ;
- une offre d'allocation desdites ressources est envoyée en priorité en réponse à une requête reçue en dernier dans une suite de plusieurs requêtes ;
- une offre d'allocation desdites ressources est envoyée en priorité en réponse à une requête ayant un niveau d'urgence de traitement prioritaire dans une suite de plusieurs requêtes reçues de différents niveaux d'urgence de traitement ;
- une offre d'allocation desdites ressources est faite suivant un mécanisme d'enchères ;
- une offre d'allocation desdites ressources est faite pour une durée définie ; et
- une offre d'allocation desdites ressources n'est faite que si d'autres ressources sont libérées en échange.

8. Procédé de gestion de demandes de ressources d'un réseau de télécommunications convergent accès-fixe et radio-mobile mis en œuvre par un premier **module (170mob) de gestion centralisée des demandes en ressources** pour clients mobiles, une partie desdites ressources étant implémentée sous une forme virtualisée et déportée dans ledit réseau, une autre partie desdites ressources étant implémentée dans une boucle locale dudit réseau, une pluralité d'opérateurs mobiles ayant chacun au moins une station de base connectée à une partie radio-mobile dudit réseau via un modem dit radio-mobile connecté à ladite boucle locale,
le procédé de gestion de demandes de ressources comprenant les étapes suivantes :
- **réception** (P3E210, P3E410) d'au moins une requête en service radio-mobile émise par un **module (110a, 110b) de gestion des ressources radio-mobiles** de chacun desdits opérateurs mobiles ; et
- **transmission** (P3E211, P3E410) à un **module (160, 160bl, 160v) de gestion centralisée de l'allocation desdites ressources** dudit réseau d'au moins une requête en ressources tenant compte desdites au moins une requête en service radio-mobile.

9. Produit programme d'ordinateur comprenant des instructions de code de programme pour la mise en œuvre du procédé selon l'une quelconque des revendications 1 à 7, lorsque ledit programme est exécuté sur un ordinateur.

10. Produit programme d'ordinateur comprenant des instructions de code de programme pour la mise en œuvre du procédé selon la revendication 8, lorsque ledit programme est exécuté sur un ordinateur.

11. Dispositif de gestion centralisée de l'allocation de ressources d'un réseau de télécommunications convergent accès-fixe et radio-mobile, une partie desdites ressources, dites ressources virtualisées, étant implémentée sous une forme virtualisée et déportée dans ledit réseau, une autre partie desdites ressources, dites ressources de boucle locale, étant implémentée dans une boucle locale dudit réseau, une pluralité d'opérateurs mobiles ayant chacun au moins une station de base connectée à une partie radio-mobile dudit réseau via un modem dit radio-mobile connecté à ladite boucle locale,
dispositif comprenant une machine de calcul reprogrammable (502) ou une machine de calcul dédiée, configurée pour :
- recevoir au moins une requête en ressources, dite requête client mobile, émise soit par un **module (110a, 110b) de gestion des ressources radio-mobiles** de chacun desdits opérateurs mobiles, soit par un premier **module (170mob) de gestion centralisée des demandes en ressources** à partir d'au moins une requête en service radio-mobile préalablement reçue en provenance dudit module de gestion des ressources radio-mobiles de chacun desdits opérateurs mobiles ;
- envoyer au moins une offre d'allocation desdites ressources auxdits modules de gestion des ressources radio-mobiles en fonction de ladite au moins une requête client mobile et d'au moins une règle prédéterminée d'offre d'allocation des ressources.

12. Dispositif de gestion centralisée des demandes en ressources d'un réseau de télécommunications convergent accès-fixe et radio-mobile pour clients mobiles, une partie desdites ressources, dites ressources virtualisées, étant implémentée sous une forme virtualisée et déportée dans ledit réseau, une autre partie desdites ressources, dites ressources de boucle locale, étant implémentée dans une boucle locale dudit réseau, une pluralité d'opérateurs mobiles ayant chacun au moins une station de base connectée à une partie radio-mobile dudit réseau via un modem dit radio-mobile connecté à ladite boucle locale, dispositif comprenant une machine de calcul reprogrammable (502) ou une machine de calcul dédiée, configurée pour :
- recevoir au moins une requête en service radio-mobile émise par un **module (110a, 110b) de gestion des ressources radio-mobiles** de chacun desdits opérateurs mobiles ; et
- transmettre à un **module (160, 160bl, 160v) de gestion centralisée de l'allocation desdites ressources** dudit réseau d'au moins une requête en ressources tenant compte desdites au moins une requête en service radio-mobile.

13. Nœud d'un réseau de télécommunications convergent accès-fixe et radio-mobile comprenant au moins un dispositif selon la revendication 11 ou 12.

## Patentansprüche

1. Verfahren zur Verwaltung der Zuweisung von Ressourcen eines konvergenten Festnetz- und Mobilfunk-Telekommunikationsnetzwerks, das von einem Modul (160, 160bl, 160v) zur zentralisierten Verwaltung der Zuweisung der Ressourcen durchgeführt wird, wobei ein Teil der Ressourcen, virtualisierte Ressourcen genannt, in einer virtualisierten und abgesetzten Form in das Netzwerk implementiert ist, wobei ein anderer Teil der Ressourcen, Local-Loop-Ressourcen genannt, in eine Local Loop des Netzwerks implementiert ist, wobei eine Mehrzahl von Mobilfunkbetreibern jeweils mindestens eine Basisstation besitzen, die mit einem Mobilfunkteil des Netzwerks über ein Modem, Mobilfunkmodem genannt, verbunden ist, das mit der Local Loop verbunden ist,
wobei das Verfahren zur Verwaltung der Zuweisung von Ressourcen die folgenden Schritte umfasst:
- Empfangen (P3E211, P3E410) mindestens einer Ressourcenanforderung, Mobilfunkkundenanforderung genannt, die entweder von einem Modul (110a, 110b) zur Verwaltung der Mobilfunkressourcen jedes der Mobilfunkbetreiber gesendet wird oder von einem ersten Modul (170mob) zur zentralisierten Verwaltung der Ressourcenbedarfe ausgehend von mindestens Mobilfunkdienstanforderung, die zuvor von dem Modul zur Verwaltung der Mobilfunkressourcen jedes der Mobilfunkbetreiber empfangen wurde;
- Senden (P5E221, P56E421) mindestens eines Ressourcenzuweisungsangebots an die Module zur Verwaltung der Mobilfunkressourcen in Abhängigkeit von der mindestens einen Mobilfunkkundenanforderung und von mindestens einer vorbestimmten Ressourcenzuweisungsangebotsregel.

2. Verfahren nach Anspruch 1, wobei mindestens eine Benutzereinrichtung eines Festnetzbetreibers mit einem Festnetzteil des Netzwerks über mindestens ein Modem, Festnetzmodem genannt, verbunden ist, das mit der Local Loop verbunden ist,
und wobei das Modul zur zentralisierten Verwaltung der Zuweisung der Ressourcen ein Empfangen (P4E211, P4E410) mindestens einer Ressourcenanforderung vornimmt, die entweder von der mindestens einen Benutzereinrichtung (100cpe) des Festnetzbetreibers gesendet wird oder von einem zweites Modul (170fix) zur zentralisierten Verwaltung der Ressourcenbedarfe ausgehend von mindestens einer Festnetzdienstanforderung, die zuvor von der mindestens einen Benutzereinrichtung empfangen wurde, Festnetzkundenanforderung genannt;
und wobei das mindestens eine Zuweisungsangebot auch an die mindestens eine Benutzereinrichtung gesendet wird, wobei das mindestens eine Zuweisungsangebot von der mindestens einen Festnetzkundenanforderung abhängig ist.

3. Verfahren nach Anspruch 1 oder 2, wobei das Modul zur zentralisierten Verwaltung der Zuweisung der Ressourcen ein Empfangen vornimmt (P1E201, P2E201):
- mindestens einer Information, die für die Verfügbarkeit der Local-Loop-Ressourcen repräsentativ ist und von einem Modul (120) zur Verwaltung der Local-Loop- und Festnetzressourcen des Netzwerks übertragen wird; und/oder
- mindestens einer Information, die für die Verfügbarkeit der virtualisierten Ressourcen repräsentativ ist und von einem Modul (130) zur Verwaltung der virtualisierten abgesetzten Ressourcen in dem Netzwerk übertragen wird;
wobei das mindestens eine Zuweisungsangebot von der mindestens einen Information, die für die Verfügbarkeit der Local-Loop-Ressourcen repräsentativ ist, und/oder von der mindestens einen Information, die für die Verfügbarkeit der virtualisierten Ressourcen repräsentativ ist, abhängig ist.

4. Verfahren nach Anspruch 3, wobei das Modul zur zentralisierten Verwaltung der Zuweisung der Ressourcen eine Übertragung (P1E202, P2E202) der mindestens einen Information, für die Verfügbarkeit der Local-Loop-Ressourcen repräsentativ ist, und/oder der mindestens einen Information, die für die Verfügbarkeit der virtualisierten Ressourcen repräsentativ ist, an das erste und/oder zweite Modul zur zentralisierten Verwaltung der Ressourcenbedarfe vornimmt.

5. Verfahren nach einem der Ansprüche 1 bis 4, wobei das Modul zur zentralisierten Verwaltung der Zuweisung der Ressourcen ein Empfangen (P7E231, P7E232, P7E431) mindestens einer Annahmebestätigung für das Ressourcenzuweisungsangebot, bestätigtes Zuweisungsangebot genannt, vornimmt, das gesendet wird von:
- mindestens einem Modul unter den Modulen zur Verwaltung der Mobilfunkressourcen jedes der Mobilfunkbetreiber; und/oder
- der mindestens einen Benutzereinrichtung.

6. Verfahren nach Anspruch 5, wenn abhängig von Anspruch 3, wobei das Modul zur zentralisierten Verwaltung der Zuweisung der Ressourcen mindestens eine Reservierungsbestätigung für die Ressourcen an das Modul zur Verwaltung der Local-Loop- und Festnetzressourcen des Netzwerks und/oder an Modul zur Verwaltung der virtualisierten abgesetzten Ressourcen in dem Netzwerk sendet (P7E233), wobei die mindestens eine Reservierungsbestätigung für die Ressourcen gesendet wird, wenn die mindestens eine Annahmebestätigung für das Ressourcenzuweisungsangebot empfangen wird.

7. Verfahren nach einem der Ansprüche 1 bis 6, wobei die mindestens eine vorbestimmte Ressourcenzuweisungsangebotsregel zu der Gruppe gehört, die Folgendes umfasst:
- ein Ressourcenzuweisungsangebot wird vorrangig als Antwort auf eine Anfrage gesendet, die in einer Folge von mehreren Anfragen als Erste empfangen wird;
- ein Ressourcenzuweisungsangebot wird vorrangig als Antwort auf eine Anfrage gesendet, die in einer Folge von mehreren Anfragen als Letzte empfangen wird;
- ein Ressourcenzuweisungsangebot wird vorrangig als Reaktion auf eine Anfrage gesendet, die eine vorrangige Bearbeitungsdringlichkeitsstufe in einer Folge von mehreren empfangenen Anfragen mit unterschiedlichen Bearbeitungsdringlichkeitsstufen hat;
- ein Ressourcenzuweisungsangebot wird nach einem Auktionsmechanismus gemacht;
- ein Ressourcenzuweisungsangebot wird für eine definierte Zeitdauer gemacht; und
- ein Ressourcenzuweisungsangebot wird nur gemacht, wenn andere Ressourcen im Austausch freigegeben werden.

8. Verfahren zur Verwaltung von Ressourcenbedarfen eines konvergenten Festnetz- und Mobilfunk-Telekommunikationsnetzwerks, das von einem erstes Modul (170mob) zur zentralisierten Verwaltung der Ressourcenbedarfe für Mobilfunkkunden durchgeführt wird, wobei ein Teil der Ressourcen in einer virtualisierten und abgesetzten Form in das Netzwerk implementiert ist, wobei ein anderer Teil der Ressourcen in eine Local Loop des Netzwerks implementiert ist, wobei eine Mehrzahl von Mobilfunkbetreibern jeweils mindestens eine Basisstation besitzen, die mit einem Mobilfunkteil des Netzwerks über ein Modem, Mobilfunkmodem genannt, verbunden ist, das mit der Local Loop verbunden ist,
wobei das Verfahren zur Verwaltung der Ressourcenbedarfe die folgenden Schritte umfasst:
- Empfangen (P3E210, P3E410) mindestens einer Mobilfunkdienstanforderung, die von einem Modul (110a, 110b) zur Verwaltung der Mobilfunkressourcen jedes der Mobilfunkbetreiber gesendet wird; und
- Übertragen (P3E211, P3E410) mindestens einer Ressourcenanforderung an ein Modul (160, 160bl, 160v) zur zentralisierten Verwaltung der Zuweisung der Ressourcen des Netzwerks unter Berücksichtigung der mindestens einen Mobilfunkdienstanforderung.

9. Computerprogrammprodukt, das Programmcodeanweisungen umfasst, die bei der Ausführung des Programms auf einem Computer das Verfahren nach einem der Ansprüche 1 bis 7 durchführen.

10. Computerprogrammprodukt, das Programmcodeanweisungen umfasst, die bei der Ausführung des Programms auf einem Computer das Verfahren nach Anspruch 8 durchführen.

11. Vorrichtung zur zentralisierten Verwaltung der Zuweisung von Ressourcen eines konvergenten Festnetz- und Mobilfunk-Telekommunikationsnetzwerks, wobei ein Teil der Ressourcen, virtualisierte Ressourcen genannt, in einer virtualisierten und abgesetzten Form in das Netzwerk implementiert ist, wobei ein anderer Teil der Ressourcen, Local-Loop-Ressourcen genannt, in eine Local Loop des Netzwerks implementiert ist, wobei eine Mehrzahl von Mobilfunkbetreibern jeweils mindestens eine Basisstation besitzen, mit einem Mobilfunkteil des Netzwerks über ein Modem, Mobilfunkmodem genannt, verbunden ist, das mit der Local Loop verbunden ist, wobei die Vorrichtung eine umprogrammierbare Rechenmaschine (502) oder eine dedizierte Rechenmaschine umfasst, die dazu ausgestaltet ist:
- mindestens eine Ressourcenanforderung, Mobilfunkkundenanforderung genannt, zu empfangen, die entweder von einem Modul (110a, 110b) zur Verwaltung der Mobilfunkressourcen jedes der Mobilfunkbetreiber gesendet wird oder von einem ersten Modul (170mob) zur zentralisierten Verwaltung der Ressourcenbedarfe ausgehend von mindestens einer Mobilfunkdienstanforderung, die zuvor von dem Modul zur Verwaltung der Mobilfunkressourcen jedes der Mobilfunkbetreiber empfangen wurde;
- mindestens ein Ressourcenzuweisungsangebot an die Module zur Verwaltung der Mobilfunkressourcen in Abhängigkeit von der mindestens einen Mobilfunkkundenanforderung und von mindestens einer vorbestimmten Ressourcenzuweisungsangebotsregel zu senden.

12. Vorrichtung zur zentralisierten Verwaltung der Ressourcenbedarfe eines konvergenten Festnetz- und Mobilfunk-Telekommunikationsnetzwerks für Mobilfunkkunden, wobei ein Teil der Ressourcen, virtualisierte Ressourcen genannt, in einer virtualisierten und abgesetzten Form in das Netzwerk implementiert ist, wobei ein anderer Teil der Ressourcen, Local-Loop-Ressourcen genannt, in eine Local Loop des Netzwerks implementiert ist, wobei eine Mehrzahl von Mobilfunkbetreibern jeweils mindestens eine Basisstation besitzen, mit einem Mobilfunkteil des Netzwerks über ein Modem, Mobilfunkmodem genannt, verbunden ist, das mit der Local Loop verbunden ist,
wobei die Vorrichtung eine umprogrammierbare Rechenmaschine (502) oder eine dedizierte Rechenmaschine umfasst, die dazu ausgestaltet ist:
- mindestens eine Mobilfunkdienstanforderung zu empfangen, die von einem Modul (110a, 110b) zur Verwaltung der Mobilfunkressourcen jedes der Mobilfunkbetreiber gesendet wird; und
- an ein Modul (160, 160b1, 160v) zur zentralisierten Verwaltung der Zuweisung der Ressourcen des Netzwerks mindestens eine Ressourcenanforderung unter Berücksichtigung der mindestens einen Mobilfunkdienstanforderung zu übertragen.

13. Knoten eines konvergenten Festnetz- und Mobilfunk-Telekommunikationsnetzwerks, der mindestens eine Vorrichtung nach Anspruch 11 oder 12 umfasst.

## Claims

1. Method for managing allocation of resources of a converged fixed access and mobile radio telecommunications network, the method being implemented by a module (160, 160bl, 160v) for centralized management of the allocation of said resources, a part of said resources, called virtualized resources, being implemented in a virtualized form and moved in said network, another part of said resources, called local-loop resources, being implemented in a local loop of said network, a plurality of mobile operators each having at least one base station connected to a mobile radio part of said network via a modem called the mobile radio modem connected to said local loop,
the method for managing allocation of resources comprising the following steps:
- receiving (P3E211, P3E410) at least one request of resources, called mobile client request, emitted either by a module (110a, 110b) for management of the mobile radio resources of each of said mobile operators, or by a first module (170mob) for centralized management of the requests for resources from at least one request for mobile radio service previously received from said mobile radio resource management module of each of said mobile operators;
- sending (P5E221, P56E421) at least one offer of allocation of said resources to said modules for management of the mobile radio resources according to said at least one mobile client request and on at least one predetermined resource-allocation-offer rule.

2. Method according to Claim 1, wherein at least one user equipment of a fixed operator is connected to a fixed access part of said network via at least one modem called fixed access modem, which is connected to said local loop,
and wherein said module for centralized management of the allocation of said resources carries out a reception of (P4E211, P4E410) at least one request for resources emitted either by said at least one user equipment (100cpe) of said fixed operator, or by a second module (170fix) for centralized management of the requests for resources from at least one request for fixed service previously received from said at least one user equipment, called the fixed client request;
and wherein said at least one allocation offer is also sent to said at least one user equipment, said at least one allocation offer being dependent on said at least one fixed client request.

3. Method according to Claim 1 or 2, wherein said module for centralized management of the allocation of said resources carries out a reception of (P1E201, P2E201) :
- at least one piece of information representing the availability of said local-loop resources transmitted by a module (120) for management of the local-loop and fixed access resources of said network; and/or
- at least one piece of information representing the availability of said virtualized resources transmitted by a module (130) for management of the virtualized resources moved in said network,
said at least one allocation offer being dependent on said at least one piece of information representing the availability of the local-loop resources and/or on said at least one piece of information representing the availability of the virtualized resources.

4. Method according to Claim 3, wherein said module for centralized management of the allocation of said resources carries out a transmission of(P1E202, P2E202) said at least one piece of information representing the availability of the local-loop resources and/or said at least one piece of information representing the availability of the virtualized resources to said first and/or second centralized resource request management module.

5. Method according to any of Claims 1 to 4, wherein said module for centralized management of the allocation of said resources carries out a reception of (P7E231, P7E232, P7E431) at least one confirmation of acceptance of said offer of allocation of said resources, called the confirmed allocation offer, sent by:
- at least one module out of said modules for management of the mobile radio resources of each of said mobile operators; and/or
- said at least one user equipment.

6. Method according to Claim 5 when dependent on Claim 3, wherein said module for centralized management of the allocation of said resources sends (P7E233) at least one confirmation of reservation of said resources to said network local loop and fixed access resource management module and/or to said module for management of the virtualized resources moved in said network, said at least one confirmation of reservation of said resources being sent when said at least one confirmation of acceptance of said offer of allocation of said resources is received.

7. Method according to any of Claims 1 to 6, wherein said at least one predetermined resource-allocation-offer rule belongs to the group containing:
- an offer of allocation of said resources is sent first in response to a request received first in a series of several requests;
- an offer of allocation of said resources is sent first in response to a request received last in a series of several requests;
- an offer of allocation of said resources is sent first in response to a request having a priority level of urgency processing in a series of several received requests having various levels of urgency of processing;
- an offer of allocation of said resources is made according to an auction mechanism;
- an offer of allocation of said resources is made for a defined duration; and
- an offer of allocation of said resources is only made if other resources are freed in exchange.

8. Method for managing requests for resources of a converged fixed access and mobile radio telecommunications network, the method being implemented by a module (170mob) for centralized mobile client resource request management, a part of said resources being implemented in a virtualized form and moved in said network, another part of said resources being implemented in a local loop of said network, a plurality of mobile operators each having at least one base station connected to a mobile radio part of said network via a modem called the mobile radio modem connected to said local loop, the method for managing requests for resources comprising the following steps:
- receiving (P3E210, P3E410) at least one request for mobile radio service emitted by a module (110a, 110b) for management of the mobile radio resources of each of said mobile operators; and
- transmitting (P3E211, P3E410) to a module (160, 160bl, 160v) for centralized management of the allocation of said resources of said network at least one request for resources taking into account said at least one request for mobile radio service.

9. Computer program product comprising program code instructions for implementing the method according to any of Claims 1 to 7, when said program is executed on a computer.

10. Computer program product comprising program code instructions for implementing the method according to Claim 8, when said program is executed on a computer.

11. Device for centralized management of allocation of resources of a converged fixed access and mobile radio telecommunications network, a part of said resources, called virtualized resources, being implemented in a virtualized form and moved in said network, another part of said resources, called local-loop resources, being implemented in a local loop of said network, a plurality of mobile operators each having at least one base station connected to a mobile radio part of said network via a modem called mobile radio modem connected to said local loop,
the device comprising a reprogrammable computing machine (502) or a dedicated computing machine, configured to:
- receive at least one request for resources, called mobile client request, emitted either by a module (110a, 110b) for management of the mobile radio resources of each of said mobile operators, or by a first module (170mob) for centralized management of the requests for resources from at least one request for mobile radio service previously received from said module for mobile radio resource management of the of each of said mobile operators;
- send at least one offer of allocation of said resources to said modules for management of the mobile radio resources according to said at least one mobile client request and on at least one predetermined resource-allocation-offer rule.

12. Device for centralized management of requests for resources of a converged fixed access and mobile radio telecommunications network, a part of said resources, called virtualized resources, being implemented in a virtualized form and moved in said network, another part of said resources, called local-loop resources, being implemented in a local loop of said network, a plurality of mobile operators each having at least one base station connected to a mobile radio part of said network via a modem called mobile radio modem is connected to said local loop,
the device comprising a reprogrammable computing machine (502) or a dedicated computing machine, configured to:
- receive at least one request for mobile radio service sent by a module (110a, 110b) for management of the mobile radio resources of each of said mobile operators; and
- transmit to a module (160, 160bl, 160v) for centralized management of the allocation of said resources of said network at least one request for resources taking into account said at least one request for mobile radio service.

13. Node of a converged fixed access and mobile radio telecommunications network, comprising at least one device according to Claim 11 or 12.
